# NEW EUROPEAN PATENT SPECIFICATION

(11) **EP 1 971 215 B2**
(45) Date of publication and mention of the opposition decision: **03.08.2016**
(45) Mention of the grant of the patent: 15.07.2009
(21) Application number: 05849867.6
(22) Date of filing: 16.12.2005
(51) Int. Cl.: A23G 4/06, A23G 3/34, A23G 4/10, A23G 4/20

(54) **COATED CHEWING GUM**
BESCHICHTETER KAUGUMMI
GOMME À MÂCHER ENROBÉE

(43) Date of publication of application: 24.09.2008
(73) Proprietor: Wm. Wrigley Jr. Company, Chicago, IL 60642 (US)
(72) Inventor: BARKALOW, David, G., Deerfield, Illinois 60015 (US); REED, Michael, A., Merrilville, Indiana 46410 (US); SOTO, Miguel, A., Chicago, Illinois 60633 (US)
(74) Representative: Campbell, Neil Boyd
(86) International application number: PCT/US2005/045853
(87) International publication number: WO 2007/070061

(56) References cited:
- EP-A- 1 057 414
- WO-A1-95/07625
- WO-A1-95/08926
- CA-C- 1 329 891
- US-A- 5 248 508
- US-A- 5 536 511
- US-A- 5 958 472
- US-A1- 2003 190 397
- US-A1- 2005 214 424
- Specification of Lycasin 80/55 Polyols comparison chart Hydrogenated starch hydrolysates

## Description

### BACKGROUND

The present invention relates to chewing gum, and more particularly to a method of making chewing gum products with a sugarless coating and improved crunch.

It is known to provide a variety of different types of chewing gum. For example, it is known in creating chewing gum, and other confectionary products, to coat the chewing gum with an outer coating. The outer coating can provide an initial sweetness or other desirable organoleptic property to the consumer.
Further, the outer coating can provide a crunching sensation when chewed by the consumer. The outer coating preferably provides a smooth outer appearance to the consumer.

Many coated chewing gum products are made with a sugarless coating. For example, products that are designed not to promote tooth decay do not use fermentable sugars in the product, or in coatings on the product. Instead, sugarless sweeteners or polyols such as sorbitol, maltitol, xylitol, erythritol, lactitol, hydrogenated isomaltulose (isomalt) and others are used in the product.

While a hard, crunchy coating is desirable, it has proven difficult to make such coatings when using sugarless sweeteners. Other prior disclosures have included a wide selection of polyols for both a center and a coating. However, there still has been difficulty in creating a coated chewing gum with a hard crunchy coating that maintains its crunchiness for an extended period of time.

### BRIEF SUMMARY

It has been found that formulating a coated chewing gum product using the same polyol in both the center portion and the coating results in a product with improved crunch and a longer shelf life.

In one aspect, a chewing gum product includes a center portion and a coating portion. The center portion includes a polyol component, gum base, an intense sweetener, a flavoring agent, and less than 1% glycerin. The polyol component includes a first polyol selected from the group consisting of isomalt, maltitol, and erythritol. The polyol component includes less than 5% any polyols other than the first polyol. The centre portion comprises less than 1% higher hydrogenated oligosaccharides. The coating portion includes the first polyol and substantially covers the center portion. The coating portion includes less than 5% polyols other than the first polyol.

In another aspect, a chewing gum product includes a center portion and a coating portion. The center portion includes a polyol component, gum base, an intense sweetener, a flavoring agent, and less than 1% glycerin. The polyol component includes a single polyol selected from the group consisting of isomalt and maltitol and is essentially free from any polyols other than the single polyol. The center portion is essentially free of hydrogenated oligosaccharides. The coating portion includes the single polyol and essentially covers the center portion. The coating portion is essentially free of any polyols other than the single polyol.

In another aspect, a method of preparing a chewing gum product with improved crunch includes mixing a polyol component, gum base, an intense sweetener, and a flavoring agent to form a center portion. The polyol component includes a first polyol selected from the group consisting of isomalt, maltitol, and erythritol, and less than 5% any polyols other than the first polyol. The centre portion comprises less than 1% higher hydrogenated oligosaccharides. The center portion is coated with a coating composition including the first polyol to substantially cover the center portion. The coating portion is essentially free of any polyols other than the first polyol. A chewing gum product is thus formed, which maintains a crunchy consistency for a period of at least 7 days at 85° F (29,4°C) and 70% relative humidity.

The foregoing and other features and advantages of the present invention will become apparent from the following detailed description of the presently preferred embodiments, when read in conjunction with the accompanying examples.

### DETAILED DESCRIPTION OF THE PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The term "chewing gum" as used herein also includes bubble gum and the like. Unless indicated otherwise, all percentages are given in weight percent.

The present invention is directed to a coated chewing gum. The chewing gum uses sugarless sweeteners known as polyols which have sweetening characteristics but which are devoid of the commonly known sugars. It has been found that using the same polyol in both the center and the coating, and including no more than a very small amount of any other polyol in the center and the coating, results in a product with improved crunch and extended shelf life. Not to be bound by theory, it is believed that using the same polyol reduces migration/adsorption of water into the coating and through the coating into the center and allows the center and coating to be in equilibrium with each other to give maximum stability.

Many commonly used polyols are not pure polyols but contain other polyols or hydrogenated oligosaccharides. For example, hydrogenated starch hydrolysates are produced by the partial hydrolysis of corn, wheat, or potato starch and the subsequent hydrogenation of the hydrotysate at high temperature under pressure. The end product is composed of sorbitol, maltitol, and higher hydrogenated saccharides. By varying the conditions and extent of hydrolysis, the occurrence of various mono-, di-, oligo- and polymeric hydrogenated saccharides in the resulting product can be varied. For example, one typically used high maltitol syrup, Lycasin® 80/55, contains about 55% maltitol, with the balance including sorbitol and various hydrogenated oligosaccharides. The term "higher hydrogenated oligosaccharides," as used herein, includes all polyols having more than two polymer units. Thus, the term does not include monomeric or dimeric polyols such as maltitol, isomalt, and erythritol.

In one aspect, the present invention is directed to chewing gums including a center portion and a coating portion. The center portion includes a polyol component, gum base, an intense sweetener, and a flavoring agent. The term "polyol component," as used herein, includes the total of all the polyols In the center portion, regardless of which ingredient provides the polyols. In the present invention, the polyol component includes a single polyol selected from the group consisting of isomalt, maltitol, and erythritol.

Isomalt is also known as hydrogenated isomaltulose. Isomalt comprises two isomers called GPM and GPS. Isomalt generally includes a 50:50 ratio of GPM and GPS and is know as isomalt ST. Another type of isomalt, known as Isomalt GS, includes a different ratio of GPM to GPS. As used herein, the term isomalt includes Isomalt ST, Isomalt GS, Isomalt M, Isomalt DC, Isomalt LM, and any other isomalt formulation regardless of the ratio of the two isomers.

In one embodiment, the center portion is essentially free of any polyols other than the single polyol. As used herein, the term "essentially free" of a component or components means that those component or components are present in such small amounts that they do not materially effect the basic and novel characteristics of the chewing gum, such as the crunch and the durability of the crunch over the typical shelf life of the product.

In another embodiment, the polyol component of the center portion includes a first polyol and less than 5% any polyols other then the first polyol. Thus, in one embodiment, the sum total of all polyols, other than the first polyols, in the center portion is less than 5%. The polyol component may also include less than 3%, less than 2%, or less than 1% any polyols other than the first polyol. The center portion includes less than 1% higher hydrogenated oligosaccharides.

The center portion preferably contains no glycerin. However, the center portion may contain a very small amount of glycerin. Glycerin is often used as a softening agent in chewing gum compositions. The center portion may contain less than 1% glycerin. Alternatively, the center portion may contain less than 0.5% or less than 0.25% glycerin. In another embodiment, the center portion is essentially free from glycerin.

The coating portion includes the same polyol present in the center portion and substantially covers the center portion. In various embodiments, the coating portion includes less than 5%, less than 3%, less than 2%, or less than 1% any polyols other than the first polyol. In one embodiment, the coating portion is essentially free of any polyols other than the single polyol. The coating portion preferably does not contain glycerin or any higher hydrogenated oligosaccharides.

Turning now to the composition of the gum center, in general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. According to one embodiment of the present invention, the insoluble gum base constitutes between about 5% and about 95% by weight of the gum. In some embodiments, the insoluble gum base comprises between about 10% and about 50% by weight of the gum, and in other embodiments, between about 20% and about 35% by weight of the gum.

The gum base typically also includes a filler component. The filler component may be calcium carbonate, magnesium carbonate, talc, dicalcium phosphate or the like. The filler may constitute between about 5% and about 60% by weight of the gum base. Alternatively, the filler may comprise about 5% to about 50% by weight of the gum base.

The flavoring agent may also be present in the chewing gum in an amount within the range of from about 0.1 % to about 10%, preferably from about 0.5% to about 3%, by weight of the gum. The term flavoring agent is meant to include flavors, cooling agents, sensates, and the like. The flavors used in the various layers of the confectionary product may include cooling agents such as menthol, as well as essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in the confectionary product. Those skilled in the art will recognize that natural and artificial flavoring may be combined in any sensorially acceptable blend. All such flavors and flavor blends are contemplated by the present invention.

Physiological cooling agents may also be used. A variety of physiological cooling agents are discussed in U.S. Patent No. 6,627,233.
Physiological cooling agents include substituted p-menthane carboxamides (such as WS-3); acyclic carboxamides (such as WS-23); menthone glycerol ketal; menthyl lactate; menthyl succinate; and 3-1-menthoxypropane-1,2-diol. Sensates may also be used as flavoring and include cooling agents, and pungent, hot, and tingling flavors.

It will be apparent that more than one flavoring agent may be used in the chewing gum product. In particular, a flavor and a physiological cooling agent may be combined for use in the chewing gum or coating.

High-intensity artificial sweeteners can also be used, alone or In combination, with the above. Sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted In the mixer itself. Color or emulsifiers may also be added at this time. If a softener such as glycerin is used, it may be added at this time, along with the polyol syrup and a portion of the bulking agent. Further portions of the bulking agent may then be added to the mixer. A flavoring agent is typically added with the final portion of the bulking agent. An encapsulated sweetening agent of the present invention is preferably added with the final portion of bulking agent and before the flavor has been added.

After the ingredients are mixed, the gum mass is formed into pellets or balls. Pellet or ball gum is prepared as conventional chewing gum but formed into pellets that are pillow shaped, or into balls. The pellets/balls are used as cores for the coated product. The cores can be sugar or polyol coated or panned by conventional panning techniques to make a unique coated pellet gum. The weight of the coating may be about 20% to about 50% of the weight of the finished product, but may be as much as 75% of the total gum product.

Turning now to the coating of the center portion, advances in panning procedures allow use of carbohydrate materials other than sucrose to be used in coating. The polyol used in the coating portion is the same as the polyol used in the gum center and is thus selected from isomalt, maltitol, and erythritol. The polyol may be blended with panning modifiers at a low level including, but not limited to, gum arabic, maltodextrins, com syrup, gelatin, cellulose type materials like carboxymethyl cellulose or hydroxypropylmethyl cellulose, starch and modified starches, vegetables gums like alginates, locust bean gum, guar gum, and gum tragacanth. Antitack agents such as insoluble carbonates like calcium carbonate or magnesium carbonate and talc may also be added as panning modifiers. Flavors may also be added with the sugarless coating to yield unique product characteristics.

As noted above, the coating may contain ingredients such as flavoring, as well as dispersing agents, coloring agents, film formers and binding agents. Flavoring agents contemplated for use in the coating include those previously described for use in the center portion, and include flavors, physiological cooling agents, sensates, and mixtures thereof. The flavoring agents may be used in an amount such that the coating will contain from about 0.2% to about 3% flavoring agent, and alternatively from about 0.7% to about 2.0% flavoring agent.

High-intensity sweeteners contemplated for use in the coating include but are not limited to synthetic substances, saccharin, thaumatin, alitame, saccharin salts, aspartame, and N-substituted APM derivatives such as neotame, sucralose and acesulfame-K. The high-intensity sweetener may be added to the coating syrup in an amount such that the coating will contain from about 0.01 % to about 2.0%, alternatively from about 0.1 % to about 1.0% high-intensity sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is one dispersing agent which may be used. The dispersing agent may be added to the coating syrup in amounts such that the coating will contain from about 0.1% to about 1.0%, and preferably from about 0.3% to about 0.6% of the agent.

Coloring agents may be added directly to the syrup in the dye or lake form. Coloring agents contemplated by the present invention include food quality dyes. Film formers preferably added to the syrup include methyl cellulose, gelatins, hydroxypropylmethyl cellulose, ethyl cellulose, hydroxypropyl cellulose, carboxymethyl cellulose and the like and combinations thereof. Binding agents may be added either as an initial coating on the chewing gum center or may be added directly into the syrup. Binding agents contemplated by the present invention include gum arabic, gum talha (another type of acacia), alginate, cellulosics, vegetable gums and the like, and used at a level of about 1% to about 12% of the coating.

The coating is initially present as a liquid syrup which contains from about 30% to about 80% or 85% of the coating ingredients previously described herein, and from about 15% or 20% to about 70% of a solvent such as water. In general, the coating process is carried out in a rotating pan. Gum center tablets to be coated are placed into the rotating pan to form a moving mass.

The material or syrup which will eventually form the coating is applied or distributed over the gum center tablets. Flavoring agents may be added before, during and after applying the syrup to the gum centers. Once the coating has dried to form a hard surface, additional syrup additions can be made to produce a plurality of coatings or multiple layers of hard coating.

In a hard coating panning procedure, syrup is added to the gum center tablets at a temperature range of from about 100° F (38° C) to about 240° F (116° C). The syrup temperature is generally from about 130° F (54° C) to about 200° F (94° C) throughout the process in order to prevent the polyol or sugar in the syrup from crystallizing. The syrup may be mixed with, sprayed upon, poured over, or added to the gum center tablets in any way known to those skilled in the art.

In general, a plurality of layers is obtained by applying single coats, allowing the layers to dry, and then repeating the process. The amount of solids added by each coating step depends chiefly on the concentration of the coating syrup. Any number of coats may be applied to the gum center tablet. Typically, no more than about 75-100 coats are applied to the gum center tablets. The present invention contemplates applying an amount of syrup sufficient to yield a coated comestible containing about 10% to about 65% coating.

Those skilled in the art will recognize that in order to obtain a plurality of coated layers, a plurality of premeasured aliquots of coating syrup may be applied to the gum center tablets. It is contemplated, however, that the volume of aliquots of syrup applied to the gum center tablets may vary throughout the coating procedure.

Once a coating of syrup is applied to the gum center tablets, the present invention contemplates drying the wet syrup in an inert medium. One drying medium comprises air. Forced drying air contacts the wet syrup coating in a temperature range of from about 70° F (21 °C) to about 115° F (46° C). Alternatively, the drying air is in the temperature range of from about 80° F (27° C) to about 100° F (38° C). The relative humidity of the drying air may be less than about 8 percent.

The drying air may be passed over and admixed with the syrup coated gum centers in any way commonly known in the art. Preferably, the drying air is blown over and around or through the bed of the syrup coated gum centers at a flow rate, for large scale operations, of about 2800 cubic feet per minute. If lower quantities of material are being processed, or if smaller equipment is used, lower flow rates would be used.

After the chewing gum product is dried and packaged, the chewing gum product maintains a crunchy consistency for a period of time. The period of time is at least 7 days, more preferably 14 days, even more preferably 21 days, and most preferably 28 days. Crunch is described to be the friability and fracturability of the coating of the chewing gum.

### EXAMPLES

The following examples of the invention and comparative examples are provided by way of explanation and illustration.

Two sets of coated chewing gums were prepared using the center compositions provided in Table 1. Comparative Example 1 used sorbitol and liquid sorbitol as the bulking sweeteners. Inventive Example 2 contained isomalt and an isomalt water syrup mixture with no other polyols. The centers of Comparative Example I and centers of Inventive Example 2 were sheeted to 1.0 gram pellets and coated with the coating formulation shown in Table 2, which contained isomalt and no other polyols.

| **TABLE 1** | | |
|---|---|---|
| **Center Formulation Wt. %** | | |
| | Comparative Example 1 | Inventive Example 2 |
| Sorbitol | 39.52% | - |
| Liquid Sorbitol (70% solids) | 7.50% | - |

| **TABLE 1** | | |
|---|---|---|
| **Center Formulation Wt. %** | | |
| | Comparative Example 1 | Inventive Example 2 |
| Isomalt | - | 42.77% |
| Gum Base | 32.00% | 32.00% |
| Calcium Carbonate | 15.00% | 15.00% |
| Glycerin | 0.75% | - |
| Liquid Isomalt (70% solids) | - | 5.00% |
| Flavor | 2.36% | 2.36% |
| Encapsulated Flavor | 2.00% | 2.00% |
| Encapsulated High Intensity Sweeteners | 0.87% | 0.87% |
| Total | 100.00% | 100.00% |

| **TABLE 2** | |
|---|---|
| **Coating Formulation** | |
| Isomalt GS | 365.4 g |
| Isomalt PF | 182.7 g |
| Gum Talha | 17.2 g |
| Titanium Dioxide | 7.7 g |
| Acesulfame K | 3.7 g |
| Color | 0.6 g |
| Water | 303 g |
| Total | 880.3 g |

The coating syrup was adjusted to 68 Brix by boiling off water or adding water as needed. In the early stages of the coating process, a total of 105 grams of Isomalt PF (a powder version of Isomalt ST) was added as dry charge after each of the first 3-10 syrup applications. After coating applications with dry charge additions, syrup applications continued and 6.4 grams of flavor was applied with two of the coating applications of syrup. The 1.0 gram centers were coated with the above syrup and dried to give a product with a piece weight of 1.49 grams

After tempering for 10 days at room temperature, the two sets of chewing gum products were then stored at 85° F (29.4°C) and 70% relative humidity and tested for crunchiness over a period of about 2 months. The test involves one or more individuals who test the crunchiness of the pellet coating by biting into it and rating the crunch on a scale of 0 to 5, with 0 being very low in crunchiness and 5 being high in crunchiness. The results are shown in Table 3. It can be seen that the chewing gum products of Inventive Example 2 maintained a high level of crunch for a significantly longer period of time than the chewing gum products of Comparative Example 1.

| **TABLE 3** | | |
|---|---|---|
| **Crunch of Chewing Gum** | | |
| Time (weeks) | Comparative Example 1 | Inventive Example 2 |
| 0 | 4 | 5 |
| 1 | 3 | 5 |
| 2 | 2 | 4.5 |
| 3 | 1.5 | 3 |

| **TABLE 3** | | |
|---|---|---|
| **Crunch of Chewing Gum** | | |
| Time (weeks) | Comparative Example 1 | Inventive Example 2 |
| 4 | 1.5 | 4.5 |
| 5 | 1 | 4 |
| 6 | 1 | 4.5 |
| 7 | 0 | 4 |
| 8 | 0 | 4 |
| 9 | 0 | 4 |
| 10 | - | 4.5 |

Two sets of coated chewing gums were prepared using the center compositions provided in Table 4. Comparative Example 3 included sorbitol and glycerin. Example 4 contained powdered maltitol and 3% Lycasin® 80/55 syrup, which is 55% maltitol and 85% solids. The Lycasin® 80/55 syrup contains a very low level of sorbitol and other polyols. Thus, the amount of polyols other than maltitol, in the polyol component, of the center of Example 4 was less than 2%. Additionally, the amount of higher hydrogenated oligosaccharides in the center portion was less than 2%. The centers of Comparative Example 3 and Example 4 were sheeted as 1.0 gram pellets and coated with the coating formulation shown in Table 5.

| **TABLE 4** | | |
|---|---|---|
| **Center Formulation Wt. %** | | |
| | Comparative Example 3 | Example 4* |
| Sorbitol | 46.43% | - |
| Maltitol | - | 47.43% |
| Gum Base | 33.00% | 33.00% |
| Calcium Carbonate | 13.00% | 13.00% |
| Glycerin | 4.00% | - |
| Lecithin | 0.45% | 0.45% |
| Lycasin® 80/55 syrup | - | 3.00% |
| Flavor | 2.30% | 2.30% |
| Intense sweeteners | 0.14% | 0.14% |
| Encapsulated sweeteners | 0.68% | 0.68% |
| Total | 100.00% | 100.00% |

| | | |
|---|---|---|
| * Now outside claim 1 | | |

| **TABLE 5** | |
|---|---|
| **Coating Formulation** | |
| Maltitol powder | 850 g |
| Gum Talha | 45 g |
| Aspartame | 3 g |
| Titanium Dioxide | 6 g |
| Water | 388 g |

The coating syrup was adjusted to 68 Brix by boiling off water or adding water as needed. In the early stages of the coating process, a total of 38 grams of powder maltitol was added as dry charge after each of the first 3-10 syrup applications. After the coating applications.with dry charge additions, syrup applications continued and 4.25 grams of flavor was applied with two of the coating applications of syrup. The 1.0 gram centers were coated with the above syrup and dried to give a product with a piece weight of 1.49 grams.

After tempering for 10 days at room temperature, the two sets of chewing gum products were then stored at 85° F (29,4°C) and 70% relative humidity and tested for crunchiness over a period of about 2 months. The results are shown in Table 6. It can be seen that the chewing gum products of Example 4 maintained a high level of crunch for a significantly longer period of time than the chewing gum products of Comparative Example 3.

| **TABLE 6** | | |
|---|---|---|
| **Crunch of Chewing Gum** | | |
| Time (weeks) | Comparative Example 3 | Example 4 |
| 0 | 5 | 5 |
| 1 | 4.5 | 5 |
| 2 | 4 | 5 |
| 3 | 4 | 5 |
| 4 | 2 | 5 |
| 5 | 2 | 4 |
| 6 | 2 | 4.5 |
| 7 | 1.5 | 5 |
| 8 | 1.5 | 5 |
| 9 | 1 | 5 |
| 10 | 2 | 5 |

Two sets of coated chewing gums were prepared using the center compositions provided in Table 7. Comparative Example 5 included sorbitol and glycerin. Example 6 contained powdered maltitol and Lycasin® 80/55 syrup, which is 55% maltitol, and 85% solids. The Lycasin® 80/55 syrup contains a very low level of sorbitol and other polyols. Thus, the amount of polyols other than maltitol in the polyol component of the center of Example 6 was less than 2%. Additionally, the amount of higher hydrogenated oligosaccharides in the center portion was less than 2%. Example 6 contained no glycerin.

| **TABLE 7** | | |
|---|---|---|
| **Center Formulation Wt. %** | | |
| | Comparative Example 5 | Example 6* |
| Sorbitol | 45.52% | - |
| Maltitol | - | 45.52% |
| Gum Base | 31.00% | 31.00% |
| Calcium Carbonate | 13.90% | 13.90% |
| Glycerin | 4.00% | - |
| Water | 1.00% | 1.00% |
| Lycasin® 80/55 syrup | - | 4.00% |
| Flavor | 2.78% | 2.78% |
| Encapsulated sweeteners | 1.80% | 1.80% |
| Total | 100.00% | 100.00% |

| | | |
|---|---|---|
| * Now outside claim 1 | | |

The centers of Comparative Example 5 and Example 6 were sheeted as 1.0 gram pellets and coated with the coating formulation shown in Table 8. The coating process was done on Driam DRC500/600 coater using a center charge of 12 Kg.

| **TABLE 8** | | |
|---|---|---|
| **Coating Formulations for Examples 5 & 6** | | |
| Coating Syrup | Coating Syrup 1 | Coating Syrup 2 |
| Maltitol powder | 5.30 Kg | 3.2 Kg |
| Gum Talha | 1.78 Kg | 0.47 Kg |
| Acesulfame K | 0.029 Kg | - |
| Titanium Dioxide | 0.038 Kg | 0.024 Kg |
| Water | 0.90 Kg | 1.0 Kg |

The coating syrup was adjusted to 72 Brix by boiling off water or adding water as needed. In the early stages of the coating process, powder maltitol was added as dry charge after each of the first 3-10 syrup applications with Coating Syrup 1. After the coating applications with dry charge additions, syrup applications continued with Coating Syrup 1 and four dosages of 22.3 grams of flavor was applied with each of four of the coating applications followed by two applications of Coating Syrup 1.

Coating Syrup 2 at a Brix of 70 was used as a smoothing syrup in the final 1/3 of the coating process. At the end of the process, the coated gum was polished with 7 grams of carnauba wax and 11 grams of talc and packaged. The 1.0 gram centers were coated with the above syrups and dried to give a product with a final piece weight of 1.52 grams.

After packaging and holding for 1 month at room temperature, the two sets of chewing gum products were then tested for crunchiness in a formal 5 member sensory panel. The sensory panel judged the crunchiness on a 1 to 10 scale with 1 being no crunch and 10 being extremely crunchy. Comparative Example 5 had a crunch rating of 6.0 and Example 6 had a crunch rating of 7.2. Other sensory attributes indicated that Example 6 was slightly softer in texture initially and throughout compared to Comparative Example 5.

Two sets of chewing gums are prepared using the center compositions in Table 9. Comparative Example 7 contains sorbitol and Lycasin® 80/55 syrup. The Lycasin® 80/55 syrup at 85% solids contains a low level of sorbitol and other polyols. Inventive Example 8 contains erythritol and no glycerin, syrup or other liquid ingredients. The centers of the comparative example and inventive example are sheeted as 1.0 gram pellets and coated with the coating formulation in Table 10. A higher level of gum talha is used to act as a binder and give a quality coating with erythritol than the level required with other polyols.

| **TABLE 9** | | |
|---|---|---|
| **Center Formulation Wt. %** | | |
| | Comparative Example 7 | Inventive Example 8 |
| Sorbitol | 47.6% | - |
| Erythritol | - | 56.80% |
| Gum Base | 30.2% | 30.00% |
| Calcium Carbonate | 11.0% | 10.0% |
| Lycasin® syrup | 8.0% | - |
| Lecithin | 0.50% | 0.40% |
| Flavor | 1.90% | 1.90% |
| Encapsulated sweeteners | 0.9% | 0.9% |
| Total | 100.00% | 100.00% |

## Claims

1. A chewing gum product with improved crunch comprising:
a) a center portion comprising a polyol component, gum base, an intense sweetener, a flavoring agent, and between 0% and 1% glycerin, wherein the polyol component comprises a first polyol selected from the group consisting of isomalt, maltitol, and erythritol, and less than 5% any polyols other than the first polyol and wherein the center portion comprises less than 1% higher hydrogenated oligosaccharides; and
b) a coating portion comprising the first polyol and covering the center portion, wherein the coating portion comprises less than 5% any polyols other than the first polyol.

2. The chewing gum product of claim 1 wherein the polyol component comprises less than 3% any polyols other than the first polyol.

3. The chewing gum product of claim 1 wherein the polyol component comprises less than 2% any polyols other than the first polyol.

4. The chewing gum product of claim 1 wherein the polyol component and/or the coating portion is essentially free of any polyols other than the first polyol.

5. The chewing gum product of any one of claims 1 to 4 wherein the center portion is essentially free of higher hydrogenated oligosaccharides.

6. The chewing gum product of any one of the preceding claims wherein the center portion comprises between 0% and 0.25% glycerin.

7. The chewing gum product of any one of claims 1 to 5 wherein the center portion is essentially free of glycerin.

8. The chewing gum product of any one of the preceding claims wherein the first polyol is isomalt.

9. The chewing gum product of any one of claims 1 to 7 wherein the first polyol is maltitol.

10. The chewing gum product of any one of claims 1 to 7 wherein the first polyol is erythritol.

11. The chewing gum product of any one of the preceding claims wherein the intense sweetener is selected from the group consisting of sucralose, aspartame, N-substituted APM derivatives, salts of acesulfame, alitame, saccharin and its salts, cyclamic acid and its salts, glycyrrhizin, dihydrochalcones, thaumatin, monellin, and mixtures thereof.

12. The chewing gum product of any one of the preceding claims wherein the flavoring agent is selected from the group consisting of flavors, physiological cooling agents, sensates, and mixtures thereof.

13. The chewing gum product of any one of the preceding claims wherein the chewing gum product maintains a crunchy consistency for a period of at least 7 days at 85°F and 70% relative humidity.

14. The chewing gum product of any one of claims 1 to 12 wherein the chewing gum product maintains a crunchy consistency for a period of at least 14 days at 85°F (29.4°C) and 70% relative humidity.

15. The chewing gum product of any one of claims 1 to 12 wherein the chewing gum product maintains a cunchy consistency for a period of at least 21 days at 85°F (29.4°C) and 70% relative humidity.

16. A method of preparing a chewing gum product with improved crunch, as defined in any one of the preceding claims comprising:
a) mixing a polyol component, gum base, an intense sweetener, and a flavoring agent to form a center portion, wherein the polyol component comprises a first polyol selected from the group consisting of isomalt, maltitol, and erythritol, and less than 5% any polyols other than the first polyol and wherein the center portion comprises less than 1% higher hydrogenated oligosaccharides; and
b) coating the center portion with a coating composition comprising the first polyol to substantially cover the center portion, wherein the coating portion less than 5% of any polyols other than the first polyol, thus forming a chewing gum product.

## Patentansprüche

1. Kaugummiprodukt mit verbesserter Knackigkeit, umfassend:
a) einen Innenteil, umfassend eine Polyolkomponente, eine Gummibasis, ein starkes Süßmittel, ein Aromamittel und zwischen 0% und 1% Glycerin, worin die Polyolkomponente ein erstes Polyol ist, ausgewählt aus der Gruppe, bestehend aus Isomalt, Maltitol und Erythritol, und weniger als 5% eines Polyols, das von dem ersten Polyol verschieden ist, und worin der Innenteil weniger als 1 % höher hydrierte Oligoaccharide umfasst; und
b) einen Beschichtungsteil, umfassend das erste Polyol, und welcher den Innenteil umhüllt, worin der Beschichtungsteil weniger als 5% eines Polyols, das verschieden von dem ersten Polyol ist, umfasst.

2. Kaugummiprodukt nach Anspruch 1, worin die Polyolkomponente weniger als 3% eines Polyols umfasst, das verschieden von dem ersten Polyol ist.

3. Kaugummiprodukt nach Anspruch 1, worin die Polyolkomponente weniger als 2% eines Polyols umfasst, das verschieden von dem ersten Polyol ist.

4. Kaugummiprodukt nach Anspruch 1, worin die Polyolkomponente und/oder der Beschichtungsteil im Wesentlichen frei von Polyolen ist, die verschieden von dem ersten Polyol sind.

5. Kaugummiprodukt nach einem der Ansprüche 1 bis 4, worin der Innenteil im Wesentlichen frei von höher hydrierten Oligosacchariden ist.

6. Kaugummiprodukt nach einem der vorhergehenden Ansprüche, worin der Innenteil zwischen 0% und 0,25% Glycerin umfasst.

7. Kaugummiprodukt nach einem der Ansprüche 1 bis 5, worin der Innenteil im Wesentlichen frei von Glycerin ist.

8. Kaugummiprodukt nach einem der vorhergehenden Ansprüche, worin das erste Polyol Isomalt ist.

9. Kaugummiprodukt nach einem der Ansprüche 1 bis 7, worin das erste Polyol Maltitol ist.

10. Kaugummiprodukt nach einem der Ansprüche 1 bis 7, worin das erste Polyol Erythritol ist.

11. Kaugummiprodukt nach einem der vorhergehenden Ansprüche, worin das starke Süßmittel ausgewählt ist aus der Gruppe, bestehend aus Sucralose, Aspartam, N-substituierten APM-Derivaten, Salzen von Acesulfam, Alitam, Saccharin und dessen Salzen, Cyclamsäure und deren Salzen, Glyzyrrhizin, Dihydrochalkonen, Thaumatin, Monellin und Gemischen davon.

12. Kaugummiprodukt nach einem der vorhergehenden Ansprüche, worin das Aromamittel ausgewählt ist aus der Gruppe, bestehend aus Aromen, physiologischen Kühlmitteln, Sensaten und Gemischen davon.

13. Kaugummiprodukt nach einem der vorhergehenden Ansprüche, worin das Kaugummiprodukt eine knackige Konsistenz für eine Dauer von mindestens 7 Tagen bei 85°F und 70% relativer Feuchte beibehält.

14. Kaugummiprodukt nach einem der Ansprüche 1 bis 12, worin das Kaugummiprodukt eine knackige Konsistenz für eine Dauer von mindestens 14 Tagen bei 85°F (29,4°C) und 70% relativer Feuchte beibehält.

15. Kaugummiprodukt nach einem der Ansprüche 1 bis 12, worin das Kaugummiprodukt eine knackige Konsistenz für eine Dauer von mindestens 21 Tagen bei 85°F (29,4°C) und 70% relativer Feuchte beibehält.

16. Verfahren zum Herstellen eines Kaugummiprodukts mit verbesserter Knackigkeit, wie in einem der vorhergehenden Ansprüche definiert, umfassend:
a) Mischen einer Polyolkomponente, einer Gummibasis, eines starken Süßmittels und eines Aromamittels, um einen Innenteil zu bilden, worin die Polyolkomponente ein erstes Polyol, ausgewählt aus der Gruppe, bestehend aus Isomalt, Maltitol und Erythritol, und weniger als 5% eines Polyols, das von dem ersten Polyol verschieden ist, umfasst, und worin der Innenteil weniger als 1% höher hydrierte Oligisaccharide umfasst; und
b) Beschichten des Innenteils mit einer Beschichtungszusammensetzung, die das erste Polyol umfasst, um den Innenteil wesentlich zu umhüllen, worin der Beschichtungsteil weniger als 5% eines Polyols, das verschieden von dem ersten Polyol ist, umfasst, um ein Kaugummiprodukt zu bilden.

## Revendications

1. Produit consistant en gomme à mâcher ayant un caractère croquant amélioré, comprenant :
a) une portion servant de centre comprenant un constituant du type polyol, une base de gomme, un édulcorant intense, un agent aromatisant et 0 % à 1 % de glycérol, ledit constituant du type polyol comprenant un premier polyol choisi dans le groupe consistant en l'isomalt, le maltitol et l'érythritol, et moins de 5 % de n'importe quels polyols autres que le premier polyol, et la portion servant de centre comprenant moins de 1 % d'oligosaccharides hydrogénés supérieurs ; et
b) une portion d'enrobage comprenant le premier polyol et recouvrant la portion servant de centre, ladite portion d'enrobage comprenant moins de 5 % de quelconques polyols autres que le premier polyol.

2. Produit consistant en gomme à mâcher suivant la revendication 1, dans lequel le constituant du type polyol comprend moins de 3 % de quelconques polyols autres que le premier polyol.

3. Produit consistant en gomme à mâcher suivant la revendication 1, dans lequel le constituant du type polyol comprend moins de 2 % de quelconques polyols autres que le premier polyol.

4. Produit consistant en gomme à mâcher suivant la revendication 1, dans lequel le constituant du type polyol et/ou la portion d'enrobage sont pratiquement dépourvus de quelconques polyols autres que le premier polyol.

5. Produit consistant en gomme à mâcher suivant l'une quelconque des revendications 1 à 4, dans lequel la portion de centre est pratiquement dépourvue d'oligosaccharides hydrogénés supérieurs.

6. Produit consistant en gomme à mâcher suivant l'une quelconque des revendications précédentes, dans lequel la portion de centre comprend 0 % à 0,25 % de glycérol.

7. Produit consistant en gomme à mâcher suivant l'une quelconque des revendications 1 à 5, dans lequel la portion de centre est pratiquement dépourvue de glycérol.

8. Produit consistant en gomme à mâcher suivant l'une quelconque des revendications précédentes, dans lequel le premier polyol est l'isomalt.

9. Produit consistant en gomme à mâcher suivant l'une quelconque des revendications 1 à 7, dans lequel le premier polyol est le maltitol.

10. Produit consistant en gomme à mâcher suivant l'une quelconque des revendications 1 à 7, dans lequel le premier polyol est l'érythritol.

11. Produit consistant en gomme à mâcher suivant l'une quelconque des revendications précédentes, dans lequel l'édulcorant intense est choisi dans le groupe consistant en le sucralose, l'aspartame, des dérivés de APM N-substitués, des sels d'acésulfame, l'alitame, la saccharine et ses sels, l'acide cyclamique et ses sels, la glycyrrhizine, des dihydrochalcones, la thaumatine, la monelline et leurs mélanges.

12. Produit consistant en gomme à mâcher suivant l'une quelconque des revendications précédentes, dans lequel l'agent aromatisant est choisi dans le groupe consistant en des arômes, des agents rafraîchissants physiologiques, des agents engendrant une sensation et leurs mélanges.

13. Produit consistant en gomme à mâcher suivant l'une quelconque des revendications précédentes, ledit produit consistant en gomme à mâcher maintenant une consistance croquante pendant une période de temps d'au moins 7 jours à 85°F (29,4°C) et une humidité relative de 70 %.

14. Produit consistant en gomme à mâcher suivant l'une quelconque des revendications 1 à 12, ledit produit consistant en gomme à mâcher maintenant une consistance croquante pendant une période de temps d'au moins 14 jours à 85°F (29,4°C) et une humidité relative de 70 %.

15. Produit consistant en gomme à mâcher suivant l'une quelconque des revendications 1 à 12, ledit produit consistant en gomme à mâcher maintenant une consistance croquante pendant une période de temps d'au moins 21 jours à 85°F (29,4°C) et une humidité relative de 70 %.

16. Procédé pour la préparation d'un produit consistant en gomme à mâcher ayant un caractère croquant amélioré, répondant à la définition figurant dans l'une quelconque des revendications précédentes, comprenant :
a) le mélange d'un constituant du type polyol, d'une base de gomme, d'un édulcorant intense et d'un agent aromatisant pour former une portion de centre, le constituant du type polyol comprenant un premier polyol choisi dans le groupe consistant en l'isomalt, le maltitol et l'érythritol, et moins de 5 % de quelconques polyols autres que le premier polyol, la portion de centre comprenant moins de 1 % d'oligosaccharides hydrogénés supérieurs ; et
b) l'enrobage de la portion de centre avec une composition d'enrobage comprenant le premier polyol pour recouvrir substantiellement la portion de centre, ladite portion d'enrobage comprenant moins de 5 % de quelconques polyols autres que le premier polyol, en formant ainsi un produit consistant en gomme à mâcher.
